# EUROPÄISCHE PATENTSCHRIFT

(11) **EP 4 375 177 B1**
(45) Veröffentlichungstag und Bekanntmachung des Hinweises auf die Patenterteilung: **16.09.2026**
(21) Anmeldenummer: 23211087.4
(22) Anmeldetag: 21.11.2023
(51) Int. Cl.: B62K 7/02, B62K 21/18, B62J 7/06

(54) **FAHRRADRAHMENELEMENT**
BICYCLE FRAME ELEMENT
ÉLÉMENT DE CADRE DE BICYCLETTE

(30) Priorität: 23.11.2022 DE 202022106571 U
(43) Veröffentlichungstag der Anmeldung: 29.05.2024
(73) Patentinhaber: RTI Sports GmbH, 56070 Koblenz (DE)
(72) Erfinder: Claussen, Justin, 53343 Wachtberg/ Pech (DE); Rasche, Johannes, 64285 Darmstadt (DE); Delauney, Sebastian, 56075 Koblenz (DE)
(74) Vertreter: dompatent

(56) Entgegenhaltungen:
- EP-A2- 3 686 097
- EP-B1- 3 015 352
- WO-A1-2020/175981
- WO-A2-2014/082099
- DE-U1- 202013 007 598
- JP-U- S54 102 847
- JP-Y1- S4 330 501

## Beschreibung

Die Erfindung betrifft ein Fahrradrahmenelement, insbesondere ein Fahrradrahmenelement eines Lastenfahrradrahmens.

Fahrradrahmen bestehen aus unterschiedlichen Fahrradrahmenelementen, beispielsweise dem zentralen Fahrradrahmenelement, das bei herkömmlichen Rädern aus einem Unterrohr, einem Oberrohr und einem Sattelrohr ausgebildet ist, wobei das Sattelrohr und das Unterrohr über eine Tretlageraufnahme miteinander und das Oberrohr zusammen mit dem Unterrohr, mit einem Steuerrohr, das den Gabelschaft aufnimmt, verbunden sein können. Ferner kann ein Fahrradrahmen als weiteres Element einen Hinterbau aufweisen, der üblicherweise zwei Kettenstreben und zwei Sattelstreben aufweist, die üblicherweise im Bereich der Hinterradachse miteinander verbunden sind und die Hinterradachse tragen. Der Hinterbau kann fest mit dem Tretlager und dem Sattelrohr verbunden oder über Gelenke und Federelemente als gefederter Hinterbau mit dem zentralen Fahrradrahmenelement verbunden sein. Insbesondere bei Lastenrädern ist es bekannt, dass der Lenker nicht unmittelbar mit dem Gabelschaft verbunden ist, sondern ein Lenkschaft in einem Abstand zum Gabelschaft angeordnet ist. Ein Lenkschaft ist somit unabhängig vom Gabelschaft in einem Lenkerrohr schwenkbar gehalten. Zur Übertragung der Lenkbewegung vom Lenkschaft auf den Gabelschaft kann ein Gestänge vorgesehen sein, das einerseits mit dem Lenkschaft und andererseits mit dem Gabelschaft oder einem Gabelbein der Vorderradgabel verbunden ist. Ferner ist es bekannt zur Übertragung der Lenkbewegung Lenkzüge, insbesondere Bowdenzüge vorzusehen. Hierzu ist sowohl der Lenkschaft als auch der Gabelschaft mit einer Lenkscheibe verbunden. Die Lenkzüge verlaufen im Wesentlichen tangential zu den beiden Lenkscheiben und sind mit den Lenkscheiben fest verbunden.

Lastenfahrräder dienen zum Transport von Lasten. Bei sogenannten Long John Lastenrädern ist vor dem Lenkschaft eine Transportbox und in Fahrtrichtung vor der Transportbox die Vorderradgabel angeordnet. Derartige Lastenfahrräder weisen einen großen Radstand auf. Zur Verringerung des Radstandes sind ferner Lastenräder bekannt, bei denen der Bereich in dem eine Transportbox angeordnet werden kann, zumindest teilweise unterhalb des Lenkschafts angeordnet ist. Der Lastenbehälter ist sodann zwischen einer Tretlageraufnahme und dem Vorderrad angeordnet. Insbesondere kann hierzu ein Unterrohr, das zwischen der Tretlageraufnahme und dem Steuerrohr angeordnet ist, derart ausgebildet sein, dass das Unterrohr zunächst ausgehend von der Tretlageraufnahme im Wesentlichen horizontal verläuft und sodann nach oben zum Steuerrohr geführt ist. In dem horizontalen Bereich des Unterrohrs können Aufnahmeelemente für Transportbehälter vorgesehen sein. Derartige Lastenräder weisen zwar einen geringeren Radstand auf und bauen somit kürzer, weisen jedoch den Nachteil auf, dass der vorhandene Transportraum relativ klein ist.

Ein Fahrradrahmenelement mit den Merkmalen des Oberbegriffs des Anspruchs 1 ist in WO 2020/175981 beschrieben.

Aufgabe der Erfindung ist es ein Fahrradrahmenelement, insbesondere eines Lastenrahmens zu schaffen, bei dem ein Transportraum vergrößert ist.

Die Lösung der Aufgabe erfolgt erfindungsgemäß durch ein Fahrradrahmenelement mit den Merkmalen des Anspruchs 1.

Bei dem erfindungsgemäßen Fahrradrahmenelement handelt es sich insbesondere um ein Fahrradrahmenelement eines Lastenfahrrads. Insbesondere handelt es sich um ein Lastenfahrrad mit relativ kurzem Radstand im Bereich von 130cm bis 150cm. Das Fahrradrahmenelement weist eine Tretlageraufnahme auf. Die Tretlageraufnahme dient insbesondere zur Aufnahme eines Tretlagers und ggf. zusätzlich eines Elektromotors, der insbesondere unmittelbar mit dem Tretlager verbunden ist. Ferner weist das Fahrradrahmenelement ein Unterrohr auf. Das Unterrohr verbindet die Tretlageraufnahme mit einem Steuerrohr, wobei das Steuerrohr zur schwenkbaren Aufnahme eines Gabelschafts dient. Ferner weist das Fahrradrahmenelement ein Lenkerrohr auf, das zur Aufnahme eines mit einem Lenker verbundenen Lenkschafts dient. Das Lenkerrohr ist über ein Stützrohr mit der Tretlageraufnahme verbunden. Bei dem Stützrohr handelt es sich in bevorzugter Ausführungsform um ein Verbindungsrohr, zwischen der Tretlageraufnahme und dem Lenkerrohr. Besonders bevorzugt ist es, dass zusätzlich mit der Tretlageraufnahme unmittelbar oder mittelbar ein Sattelrohr verbunden ist, dass das Sattelstützrohr sowie den mit dem Sattelstützrohr verbundenen Sattel trägt.

Ein weiterer wesentlicher Bestandteil des erfindungsgemäßen Fahrradrahmenelements ist das Oberrohr, das das Lenkerrohr und das Steuerrohr miteinander verbindet. Im Unterschied zu herkömmlichen Fahrradrahmen verbindet das Oberrohr somit nicht das Steuerrohr mit dem Sattelrohr, da in bevorzugter Ausführungsform das Sattelrohr in Fahrtrichtung hinter dem Lenkerrohr angeordnet ist. Ferner weist das erfindungsgemäße Fahrradrahmenelement die Besonderheit auf, dass der den Lenker tragenden Lenkschaft nicht direkt mit dem die Gabel tragenden Gabelschaft verbunden ist. Vielmehr ist das Lenkerrohr und das Steuerrohr des Fahrradrahmenelements in einem Abstand zueinander angeordnet und über das Oberrohr miteinander verbunden. Erfindungsgemäß ist das Oberrohr derart ausgebildet, dass ein erstes Ende des Oberrohrs, das in Richtung des Lenkerrohrs weist, gegenüber einem zweiten Ende des Oberrohrs, das in Richtung des Steuerrohrs weist, einen horizontalen Abstand zueinander aufweist. Das Lenkerrohr und das Steuerrohr sind somit in unterschiedlicher Höhe angeordnet. Insbesondere ist das Lenkerrohr höher angeordnet als das Steuerrohr. Selbstverständlich können sich die beiden Rohre in Seitenansicht, bezogen auf die Höhe, überdecken. Da in besonders bevorzugter Ausführungsform das Lenkerrohr etwas höher angeordnet ist als das Steuerrohr ist ein Bereich unterhalb des Lenkerrohrs vergrößert. In diesem Bereich, d.h. insbesondere zwischen dem Oberrohr und dem Unterrohr ist ein Aufnahmeraum ausgebildet, in dem Transportbehälter angeordnet werden können. Erfindungsgemäß ist dieser Raum aufgrund des Anordnens des Lenkerrohrs in einer höheren Position als das Steuerrohr vergrößert. Gleichzeitig kann ein verhältnismä-Big tiefer Schwerpunkt realisiert werden. Erfindungsgemäß ist somit das erste Ende des Oberrohrs in einem horizontalen Abstand zum zweiten Ende des Oberrohrs angeordnet.

In einer besonders bevorzugten Ausführungsform der Erfindung weist das Oberrohr ein erstes mit dem Lenkerrohr verbundenes Rohrelement sowie ein zweites mit dem Steuerrohr verbundenes Rohrelement auf. Bei den beiden Rohrelementen kann es sich um gesonderte, insbesondere fest miteinander verbundene Bauteile, jedoch auch um ein einstückiges Bauteil, handeln. Vorzugsweise weisen die beiden Rohrelemente einen Winkel zueinander auf. Dieser liegt insbesondere in einem Bereich zwischen 120° bis 160° und besonders bevorzugt in einem Bereich von 130° bis 150°. Hierbei ist der Winkel zwischen den beiden Rohrelementen auf der Unterseite der beiden Rohrelemente zueinander gemessen. Es ist insofern bevorzugt, dass das zweite Rohrelement in Seitenansicht nach unten in Richtung des Steuerrohrs geneigt ist. Das erste Rohrelement ist in besonders bevorzugter Ausführungsform im Wesentlichen horizontal angeordnet. Durch ein derartiges in besonders bevorzugter Ausführungsform in Seitenansicht abgeknicktes oder bogenförmig ausgebildetes Oberrohr kann der Transportraum zwischen dem Oberrohr und dem Unterrohr weiter vergrößert werden.

Das Unterrohr ist vorzugsweise derart ausgestaltet, dass es einen im wesentlichen horizontalen Bereich aufweist, der dem Oberrohr zumindest teilweise gegenüber liegt und insbesondere unterhalb des Lenkerrohrs angeordnet ist. Vorzugweise weist das Oberrohr gegenüber einer horizontalen einen Winkel von weniger als ± 10°, insbesondere weniger als ± 5° auf. In einem vorderen in Richtung des Vorderrades weisenden Bereich verläuft das Unterrohr sodann nach oben in Richtung des Gabelrrohrs in bevorzugter Ausgestaltung.

In besonders bevorzugter Weiterbildung des Fahrradrahmenelements erfolgt eine Übertragung der Lenkbewegung mit Hilfe einer Seilzuglenkung. Hierzu ist es besonders bevorzugt, dass ein in dem Lenkerrohr schwenkbar angeordneter Lenkschaft, der mit dem Fahrradlenker verbindbar ist, eine erste Lenkscheibe bzw. Lenkrolle trägt. Eine zweite Lenkscheibe bzw. Lenkrolle ist mit einem im Steuerrohr schwenkbar angeordneten Gabelschaft verbunden. Der Gabelschaft ist wiederum insbesondere mit einer Gabelbrücke verbunden, die mit den beiden Gabelbeinen verbunden ist. Die beiden Lenkscheiben sind über insbesondere als Bowdenzüge ausgebildete Lenkzüge miteinander verbunden.

Vorzugsweise sind die beiden Lenkscheiben ebenfalls in einem horizontalen Abstand zueinander angeordnet. Dies hat wiederum den Vorteil, dass der Stauraum bzw. der Aufnahmeraum für zu transportierende Güter vergrößert ist.

Erfindungsgemäß ist die erste Lenkscheibe, die mit dem Lenkschaft verbunden ist, unterhalb des Oberrohrs und die zweite mit dem Gabelschaft verbundene Lenkscheibe oberhalb des Oberrohrs angeordnet. Erfindungsgemäß können die Lenkzüge seitlich neben dem Oberrohr vorbeigeführt werden. Besonders bevorzugt ist es, die Lenkzüge durch das Oberrohr hindurchzuführen. Ausgehend von der ersten Lenkscheibe sind die Lenkzüge somit in eine oder mehrere an der Unterseite des Oberrohrs vorgesehene Öffnungen eingeführt, verlaufen durch das Oberrohr hindurch und treten durch eine oder mehrere an der Oberseite des Oberrohrs vorgesehene Öffnungen aus, um sodann zu der zweiten Lenkscheibe geführt zu werden.

Zusätzlich ist es möglich oberhalb des Oberrohrs einen Gepäckträger anzuordnen. Dies ist insbesondere vorteilhaft möglich, da die erste Lenkscheibe unterhalb des Oberrohrs angeordnet ist. Aufgrund des in Seitenansicht abgeknickten Oberrohrs ist auch die zweite Lenkscheibe in einem Bereich angeordnet, der zwar in besonders bevorzugten Ausführungsform oberhalb des Oberrohrs liegt, jedoch über dieses nach oben nicht oder nur geringfügig vorsteht. Insofern behindert auch die zweite Lenkscheibe den Gepäckträger nicht oder allenfalls geringfügig. Vorzugsweise ist der Gepäckträger derart ausgebildet, dass er die zweite Lenkscheibe zumindest an der Oberseite überdeckt, sodass die zweite Lenkscheibe durch den Gepäckträger geschützt ist.

Nachfolgend wird die Erfindung anhand einer bevorzugten Ausführungsform unter Bezugnahme auf die anliegenden Zeichnungen näher erläutert.

Es zeigen:
- Figur 1: eine schematische Seitenansicht eines Lastenfahrradrahmens, und

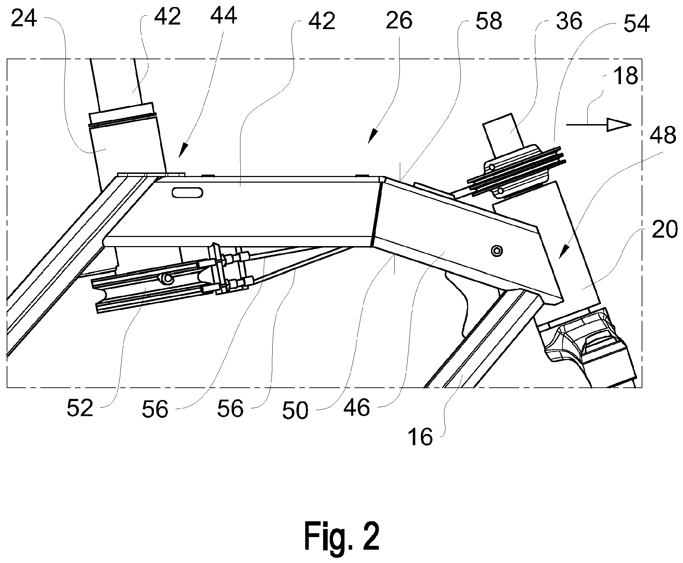

- Figur 2: eine schematische Seitenansicht des Fahrradrahmens im Bereich des Oberrohrs.

Ein Fahrradrahmenelement eines Lastenfahrrades weist eine Tretlageraufnahme 10 auf. Die Tretlageraufnahme dient zur Aufnahme eines Tretlagers und ggf. eines Elektromotors. Mit der Tretlageraufnahme 10 ist ein Unterrohr 12 verbunden. Dieses weist im dargestellten Ausführungsbeispiel einen im Wesentlichen horizontal verlaufenden Bereich 14 auf, der sodann in einem zunächst im Wesentlichen vertikal verlaufenden Bereich 16 übergeht. Das Unterrohr 12 ist sodann im Anschluss an den vertikal verlaufenden Bereich 16 im dargestellten Ausführungsbeispiel in Fahrtrichtung 18 leicht abgewinkelt und sodann mit einem Steuerrohr 20 verbunden.

Ferner ist mit der Tretlageraufnahme 10 bei dem dargestellten Lastenfahrrad ein Stützrohr 22 verbunden. Das Stützrohr 22 ist mit einem Lenkerrohr 24 verbunden. Das Lenkerrohr 24 ist über ein Oberrohr 26 mit dem Steuerrohr 20 verbunden.

Des Weiteren ist die Tretlageraufnahme 10 im dargestellten Ausführungsbeispiel mit einem Sattelrohr 28 verbunden. In dem Sattelrohr ist eine Sattelstütze 30 verschiebbar angeordnet. Die Sattelstütze 30 trägt einen nicht dargestellten Sattel.

In dem Lenkerrohr 24 ist ein Lenkschaft 32 schwenkbar angeordnet. Der Lenkschaft 32 trägt einen Lenker 34. Im Steuerrohr 20 ist ein Gabelschaft 36 ebenfalls schwenkbar angeordnet. Der Gabelschaft 36 ist unterhalb des Steuerrohrs 20 mit einer Gabelbrücke 38 verbunden, die mit zwei Gabelbeinen 40 verbunden ist.

Das Oberrohr 26 weist ein erstes Oberrohrelement 42 auf, das mit einem ersten in Richtung des Lenkerrohrs 24 weisenden Ende 44 mit dem Lenkerrohr 24 verbunden ist. Das erste Rohrelement 42 verläuft vorzugsweise im Wesentlichen horizontal. Mit dem ersten Rohrelement 42 ist ein zweites Rohrelement 46 verbunden oder auch einstückig ausgebildet. Ein zweites Ende 48 des Oberrohrs 26, bzw. des zweiten Rohrelements 46 ist mit dem Gabelschaft 20 verbunden. Das zweite Rohrelement 46 ist, ausgehend vom ersten Rohrelement 42 bezogen auf eine Fahrtrichtung 18 nach vorne fallend angeordnet.

Sämtliche Rohrelemente sind in bevorzugter Ausbildungsform als Hohlprofile ausgebildet. Die Querschnitte der Rohrelemente können hierbei unterschiedlich ausgestaltet sein, sodass diese hinsichtlich der Form, d.h. des Designs und der Funktion angepasst werden können. Insbesondere werden neben Rohrelementen mit rundem Querschnitt, Rohrelemente mit rechteckigem Querschnitt verwendet.

Die beiden Rohrelemente 42, 46 weisen bezogen auf ihre Unterseite 50 einen Winkel von ca. 150° zueinander auf.

Mit dem Lenkschaft 42 ist eine erste Lenkscheibe bzw. Lenkrolle 52 verbunden. Die Lenkscheibe 52 ist unterhalb des Rohrelements 26 angeordnet. Mit dem Gabelschaft 36 ist eine zweite Lenkscheibe bzw. Lenkrolle 54 verbunden. Die zweite Lenkscheibe 54 ist oberhalb des Steuerrohrs 20 angeordnet. Zur Übertragung von Lenkbewegung von dem Lenkschaft 42 auf den Gabelschaft 26 sind die beiden Lenkscheiben 52, 54 über Bowdenzüge 56 miteinander verbunden. Die Bowdenzüge 56 verlaufen von der ersten Lenkscheibe 52 durch eine an der Unterseite 50 des Oberrohrs 26 vorgesehene Öffnung in das Oberrohr 26 und treten durch eine an einer Oberseite 58 des Oberrohrs 26 durch zumindest eine Öffnung wieder aus und sind mit der zweiten Lenkscheibe 54 verbunden.

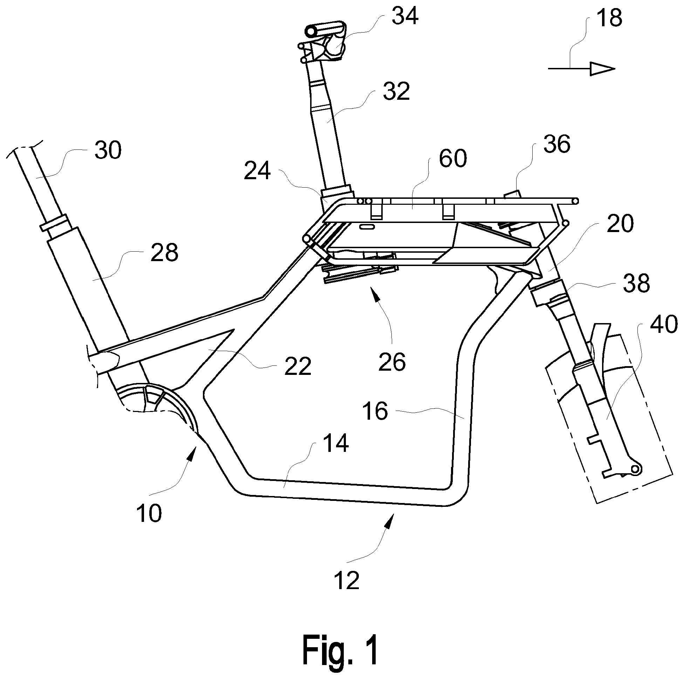

Oberhalb des Oberrohrs 26, insbesondere an einer Oberseite 58 des Oberrohrs kann ein Gepäckträger 60 (Fig. 1) angeordnet sein. Dieser ist vorzugsweise derart angeordnet und ausgebildet, dass die zweite Lenkscheibe 54 zumindest teilweise durch Bauteile des Gepäckträgers geschützt ist.

## Patentansprüche

1. Fahrradrahmenelement, insbesondere Fahrradrahmenelement eines Lastenfahrrades, mit
einer Tretlageraufnahme (10),
einem die Tretlageraufnahme (10) mit einem Steuerrohr (20) verbindenden Unterrohr (12),
einem die Tretlageraufnahme (10) mit einem Lenkerrohr (24) verbindenden Stützrohr (22) und
einem das Lenkerrohr (24) mit dem Steuerrohr (20) verbindenden Oberrohr (26),
wobei das dem Lenkerrohr (24) zugewandte erste Ende (44) des Oberrohrs (26) gegenüber dem, dem Steuerrohr (20) zugewandten zweiten Ende (48) des Oberrohrs (26) einen horizontalen Abstand aufweist
**gekennzeichnet durch**
einen im Lenkerrohr (24) schwenkbar angeordneten, mit einem Fahrradlenker (34) verbundenen Lenkschaft (42), der mit einer ersten Lenkscheibe (52) verbunden ist,
einen im Steuerrohr (20) schwenkbar angeordneten, mit einer Fahrradgabel (38, 40) verbindbaren Gabelschaft (36) der mit einer zweiten Lenkscheibe (54) verbunden ist
wobei die erste Lenkscheibe (52) unterhalb und die zweite Lenkscheibe (54) oberhalb des Oberrohrs (26) angeordnet ist.

2. Fahrradrahmenelement nach Anspruch 1, **dadurch gekennzeichnet, dass** das Oberrohr (26) ein mit dem Lenkerrohr (24) verbundenes erstes Rohrelement (42) und ein mit dem Steuerrohr (20) verbundenes zweites Rohrelement (46) aufweist.

3. Fahrradrahmenelement nach Anspruch 2, **dadurch gekennzeichnet, dass** die beiden Rohrelemente (42, 46) einen horizontalen Versatz zueinander aufweisen und/oder in einem Winkel zueinander angeordnet sind.

4. Fahrradrahmenelement nach Anspruch 3, **dadurch gekennzeichnet, dass** der Winkel in einem Bereich zwischen 120° bis 160°, insbesondere bis 130° bis 150° liegt.

5. Fahrradrahmenelement nach Anspruch 2 bis 4, **dadurch gekennzeichnet, dass** das zweite Rohrelement (46) in Fahrtrichtung (18) fallend angeordnet ist.

6. Fahrradrahmenelement nach Anspruch 2 bis 5, **dadurch gekennzeichnet, dass** das erste Rohrelement (42) im Wesentlichen horizontal angeordnet ist.

7. Fahrradrahmenelement nach einem der Ansprüche 1 bis 6, **dadurch gekennzeichnet, dass** die beiden Lenkscheiben (52, 54) über Lenkzüge (56) bei denen es sich insbesondere um Bowdenzüge handelt, miteinander verbunden sind.

8. Fahrradrahmenelement nach einem der Ansprüche 1 bis 7, **dadurch gekennzeichnet, dass** die beiden Lenkscheiben (52, 54) in einem horizontalen Abstand zueinander angeordnet sind.

9. Fahrradrahmenelement nach Anspruch 7 oder 8, **dadurch gekennzeichnet, dass** die Lenkzüge (56) durch das Oberrohr (26) hindurchgeführt sind.

10. Fahrradrahmenelement nach Anspruch 1 bis 9, **dadurch gekennzeichnet, dass** oberhalb des Oberrohrs (56) ein Gepäckträger (60) angeordnet ist.

11. Fahrradrahmenelement nach Anspruch 10, **dadurch gekennzeichnet, dass** der Gepäckträger (60) die zweite Lenkscheibe (54) zumindest teilweise überdeckt.

## Claims

1. Bicycle frame element, in particular a bicycle frame element of a cargo bicycle, comprising
a bottom bracket mount (10),
a down tube (12) connecting the bottom bracket mount (10) to a head tube (20),
a support tube (22) connecting the bottom bracket mount (10) to a steering tube (24), and
a top tube (26) connecting the steering tube (24) to the head tube (20),
wherein the first end (44) of the top tube (26) facing the steering tube (24) is horizontally spaced from the second end (48) of the top tube (26) facing the head tube (20)
**characterized by**
a steering shaft (42) pivotably arranged in the steering tube (24), connected to a bicycle handlebar (34), and connected to a first steering pulley (52),
a fork steerer (36) pivotably arranged in the head tube (20), connectable to a bicycle fork (38, 40), and connected to a second steering pulley (54)
wherein the first steering pulley (52) is arranged below and the second steering pulley (54) is arranged above the top tube (26).

2. The bicycle frame element according to claim 1, **characterized in that** the top tube (26) comprises a first tube element (42) connected to the steering tube (24) and a second tube element (46) connected to the head tube (20).

3. The bicycle frame element according to claim 2, **characterized in that** both tube elements (42, 46) are horizontally offset relative to one another and/or are arranged at an angle relative to one another.

4. The bicycle frame element according to claim 3, **characterized in that** the angle is between 120° and 160°, in particular between 130° and 150°.

5. The bicycle frame element according to claims 2 to 4, **characterized in that** the second tube element (46) is arranged to be downwardly inclined in the direction of travel (18).

6. The bicycle frame element according to claims 2 to 5, **characterized in that** the first tube element (42) is arranged substantially horizontally.

7. The bicycle frame element according to any one of claims 1 to 6, **characterized in that** both steering pulleys (52, 54) are connected to one another by steering cables (56), which are in particular Bowden cables.

8. The bicycle frame element according to any one of claims 1 to 7, **characterized in that** both steering pulleys (52, 54) are arranged to be horizontally spaced from one another.

9. The bicycle frame element according to claim 7 or 8, **characterized in that** the steering cables (56) are guided through the top tube (26).

10. The bicycle frame element according to claims 1 to 9, **characterized in that** a luggage carrier (60) is arranged above the top tube (26).

11. The bicycle frame element according to claim 10, **characterized in that** the luggage carrier (60) at least partially covers the second steering pulley (54).

## Revendications

1. Elément de cadre de bicyclette, notamment élément de cadre de bicyclette de transport, avec
une réception de pédalier (10),
un tube inférieur (12) reliant la réception de pédalier (10) avec un tube de direction (20),
un tube de support (22) reliant la réception de pédalier (10) à un tube de guidon (24), un tube supérieur (26) reliant le tube de guidon (24) au tube de direction (20),
la première extrémité (44) du tube supérieur (26), orientée vers le tube de guidon (24), étant à une distance horizontale de la deuxième extrémité (48) du tube supérieur (26) orienté vers le tube de direction (20),
**caractérisé par**
une tige de guidon (42) reliée à un guidon de bicyclette (34), disposée de façon pivotante dans le tube de guidon (24) et reliée à un premier disque de guidage (52), un tube de fourche (36) disposé de façon pivotante dans le tube de direction (20), pouvant être relié à une fourche de bicyclette (38, 40) et étant relié à un deuxième disque de guidage (54),
le premier disque de guidage (52) étant disposé en-dessous du tube supérieur (26) et le deuxième disque de guidage (54) étant disposé au-dessus du tube supérieur (26).

2. Elément de cadre de bicyclette selon la revendication 1, **caractérisé en ce que** le tube supérieur (26) comprend un premier élément de tube (42) relié au tube de guidon (24) et un deuxième élément de tube (46) relié au tube de direction (20).

3. Elément de cadre de bicyclette selon la revendication 2, **caractérisé en ce que** les deux éléments de tube (42, 46) comprennent un déport horizontal l'un par rapport à l'autre et/ou sont disposés sous un angle l'un par rapport à l'autre.

4. Elément de cadre de bicyclette selon la revendication 3, **caractérisé en ce que** l'angle se situe dans une plage entre 120° et 160°, en particulier entre 130° et 150°.

5. Elément de cadre de bicyclette selon la revendication 2 à 4, **caractérisé en ce que** le deuxième élément de tube (46) est disposée tombant dans le sens de la marche (18).

6. Elément de cadre de bicyclette selon la revendication 2 à 5, **caractérisé en ce que** le premier élément de tube (42) est disposée essentiellement horizontalement.

7. Elément de cadre de bicyclette selon l'une des revendications 1 à 6, **caractérisé en ce que** les deux disques de guidage (52, 54) sont reliés l'un à l'autre par des câbles de guidage (56), s'agissant en particulier de câbles Bowden.

8. Elément de cadre de bicyclette selon l'une des revendications 1 à 7, **caractérisé en ce que** les deux disques de guidage (52, 54) sont disposés à une distance horizontale l'un par rapport à l'autre.

9. Elément de cadre de bicyclette selon la revendication 7 ou 8, **caractérisé en ce que** les câbles de guidage (56) passent par le tube supérieur (26).

10. Elément de cadre de bicyclette selon l'une des revendications 1 à 9, **caractérisé en ce qu'**un porte-bagage (60) est fixé au-dessus du tube supérieur (56).

11. Elément de cadre de bicyclette selon la revendication 10, **caractérisé en ce que** le porte-bagage (60) recouvre, du moins en partie, le deuxième disque de guidage (54).
